Europäisches Patentamt

European Patent Office  (11) Publication number: **0 015 277**

Office européen des brevets  **B1**

(12)  **EUROPEAN PATENT SPECIFICATION**

(45) Date of publication of patent specification: **27.12.85**  (51) Int. Cl.⁴: **C 04 B 35/50, C 04 B 35/58**

(21) Application number: **79900728.1**

(22) Date of filing: **13.06.79**

(86) International application number:
**PCT/US79/00406**

(87) International publication number:
**WO 80/00079 24.01.80 Gazette 80/02**

(54)  **METHOD FOR PRODUCING POLYCRYSTALLINE SILICON NITRIDE BODIES.**

(30) Priority: **15.06.78 US 916334**

(43) Date of publication of application:
**17.09.80 Bulletin 80/19**

(45) Publication of the grant of the patent:
**27.12.85 Bulletin 85/52**

(84) Designated Contracting States:
**DE FR GB**

(56) References cited:
EP-A-0 009 859
DE-A-2 258 762
DE-A-2 351 163
GB-A- 970 639
US-A-3 830 652
US-A-3 833 389
US-A-4 025 351
US-A-4 039 340
US-A-4 046 580
US-A-4 066 468
US-A-4 073 845
US-A-4 113 830

(73) Proprietor: **GTE Laboratories Incorporated**
**100 W. 10th Street**
**Wilmington Delaware (US)**

(72) Inventor: **SMITH, Thomas, J.**
**3 Patriots Road**
**Acton, MA 01720 (US)**
Inventor: **QUACKENBUSH, Carr Lane, W.**
**3 Emerson Drive**
**Acton, Mass. 01720 (US)**
Inventor: **REID, Joseph, F.**
**22 Musket Drive**
**Acton, MA 01720 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

(56) References cited:
**Journal of the American Ceramic Society**
**issued July-August 1975, Tsuge et al, "Effect of**
**Crystallizing the grain boundary glass phase**
**on the high temperature strength of hot-**
**pressed Si3N4 containing Y2O3" Pgs. 323-326**

Courier Press, Leamington Spa, England.

Journal of the American Ceramic Society, issued September-October 1977, Smith, "Temperature and compositional stability of a Y6Si6O21 Phase in oxidized Si3N4", Pgs. 465-466

CHEMICAL ABSTRACTS, vol. 87, no. 2, 11th July 1977, page 290, no. 10354d Columbus, Ohio, U.S.A.

JOURNAL OF THE AMERICAN CERAMIC SOCIETY, vol. 60, no. 5/6, May/June 1977, pages 249-252 Columbus, Ohio, U.S.A. F.F. LANGE et al.: "Phase Relations and Stability Studies in the Si3N4-SIO2-Y2O3 Pseudoternary System"

AMERICAN CERAMIC SOCIETY BULLETIN, vol. 54, no. 9, September 1975, pages 778-781 Columbus, Ohio, U.S.A. G.E. GAZZA et al.: "Effect of Yttria Additions on Hot-Pressed Si3N4"

AMERICAN CERAMIC SOCIETY BULLETIN, vol. 57, no. 11, November 1978, pages 1059-1060 Columbus, Ohio, U.S.A. G.E. GAZZA et al.: "Hot-pressed Si3N4 with Improved Thermal Stability"

## 0 015 277

**Description**

This invention relates to polycrystalline ceramic bodies of $Si_3N_4$, and in particular refers to the manufacture of such bodies having a substantially crystalline intergranular phase.

From "Journal of the American Ceramic Society", volume 60, No. 5/6 (1977), pages 249 to 252 there is already known a method for producing a polycrystalline body consisting essentially of a first phase of $Si_3N_4$ grains, and a second intergranular phase comprising $SiO_2$ and a densifying additive, and being substantially completely crystalline, in which high purity raw material powders are milled and are pressed or sintered after prepressing.

In the above identified document on page 249 there is indicated that the $Si_3N_4$ powder contains approximately 90% alpha-$Si_3N_4$, approximately 10% beta-$Si_3N_4$, 1% 3 Si, and 0.7 weight percent oxygen. Since there is only 0.7 weight percent oxygen present, the maximum possible amount of $SiO_2$ to account for all the oxygen would be 1.31 grams of $SiO_2$ per 100 grams of material or 1.3 weight percent $SiO_2$ in the material. Furthermore, the above document indicates that a heat treatment is required in the form of a period of oxidation which is carried out for an extended period at an elevated temperature.

From EP—A—9859 there is known a method of manufacture for obtaining a ternary system containing silicon nitride, silica and metal oxides, in particular yttria, which comprises the step of combining $Si_3N_4$ with critically controlled amounts of certain metal oxides in a narrow volume fraction range. Common impurities arising from the production of silicon nitride are iron and aluminum. The document referred to above allows up to 1.0% aluminum, and this corresponds to about 1.8% by weight aluminum oxide. Aluminum oxide containing compositions, however, performed purely compared to materials freely of aluminum oxide.

From US—A—4,046,580 there is known a method of manufacture of a silicon nitride-based sintered material comprising the step of adding to silicon nitride at least one of oxide of the elements belonging to the III A group in the Periodic Table. In particular, the document teaches $Si_3N_4$ bodies having intergranular phase of crystal binary compounds of $Si_3N_4$ and $Y_2O_3$ or other specified rare earth oxides. From US—A—3,830,652 there is known a method for manufacture of high strength, high density, silicon nitride by the addition of between 1.0 to 3.5% by weight of yttrium in the form of a compound to silicon nitride powder and hot-pressing the material.

While sintering or densifying aids as yttrium oxides or rare earth oxides are thought to deleteriously affect maximum attainability of high temperature strength and creep resistance, nevertheless such additives are thought essential to achieve higher densities, that is, densities approaching theoretical density, which are also critical to the achievement of high temperature strength.

Unfortunately, it has been found that certain dense $Si_3N_4$ bodies containing densifying additives, while exhibiting excellent mechanical strength at room temperature and elevated temperatures up to about 1000°C undergo significant and sometimes drastic reductions in strength at temperatures above 1000°C and particularly above 1200°C.

In accordance with the invention, it has been found that dense polycrystalline bodies consisting essentially of a first phase of $Si_3N_4$ grains, and a second intergranular phase comprising $SiO_2$ and a densifying additive and being substantially completely crystalline exhibit remarkable retension of mechanical strength at temperatures at the range of 1000°C to 1600°C, provided that the intergranular phase is substantially completely crystalline. As used therein, the terms "crystalline" and "polycrystalline" describe a solid composed of atoms, ions or molecules arranged in a pattern which is repetitive in three dimensions and exhibits distinct X-ray diffraction intensity peaks characteristic of the crystal structure, while "glass", "glassy" or "amorphous" means a short range order solid as indicated by a lack of X-Ray diffraction intensity peaks and by broad infrared absorption peaks.

In accordance with the inventive method, the desired complete crystallinity of the intergranular phase can be achieved in that the $SiO_2$ is present in the amount of at least 3 weight percent, and that impurities which are soluble in the silicate second phase and, thus, stabilize this intergranular phase in its amorphous state, such as alumina, are maintained below 0.5 weight percent, so that the intergranular phase undergoes full crystallization during cooling from the sintering temperatures, so that a heat treatment after hot-pressing or sintering is rendered superfluous.

Figure 1 is a portion of an x-ray diffraction pattern for a silicon nitride body containing six percent $Y_2O_3$ plus about 2.5 percent $Al_2O_3$;

Figure 2 is a portion of an x-ray diffraction pattern for the silicon nitride body of Figure 1 essentially without $Al_2O_3$;

Figures 3 and 4 are load deformation curves for $Si_3N_4$ bodies containing 12 percent $Y_2O_3$ plus up to 2 weight percent $Al_2O_3$ before and after a post-sintering crystallization heat treatment;

Figure 5 is a portion of an x-ray diffraction pattern for a 52 percent $Y_2O_3$—28 percent $Al_2O_3$—20 percent $SiO_2$ composition;

Figure 6 is a portion of an x-ray diffraction pattern for a 65 percent $Y_2O_3$—35 percent $SiO_2$ composition;

Figure 7 is a dialatometric plot of curves "a" and "b" for the compositions of Fig. 5 before and after heat treatment; and

Figure 8 is a plot of mechanical stresses at 1400°C versus cross head travel for $Si_3N_4$ bodies containing 6 percent $Y_2O_3$ and 0 to 2.5 percent $Al_2O_3$.

3

The materials described herein have a composite microstructure of $Si_3N_4$ grains and an intergranular phase consisting of $SiO_2$ (a natural impurity on the surface of the $Si_3N_4$ starting powder) and the densifying additive. In addition, unintentional impurities present in the body tend to concentrate in the intergranular phase. Because the intergranular phase is continuous, its characteristics profoundly affect the high temperature properties of the composite material. An amorphous second phase is highly undesirable in that silicate glasses which tend to form between the grains lead to poor mechanical strength of the $Si_3N_4$ body above about 1200°C.

The presence of amorphous material between the $Si_3N_4$ grains facilitates their separation at high temperature. This separation is manifested by slow crack propagation leading to plastic deformation of the body and causing degradation of structural integrity.

Impurities in the starting raw material powders, or impurities introduced during processing prior to consolidation which are present in $Si_3N_4$ bodies such as oxides (such as $Al_2O_3$), which are soluble in the silicate second phase will stabilize this intergranular phase in its amorphous state by offering hindrance to the reorganization process which allows crystallization. It is therefore desirable for these powders to be processed into polycrystalline bodies in such a way that the intergranular phase undergoes full crystallization during cooling from the sintering temperatures or alternatively that this full crystallization be obtained by a subsequent heat treatment procedure. By either course, a considerably more refractory intergranular phase is obtained which in turn leads to significantly enhanced high temperature mechanical strength and a large reduction or elimination of the plastic deformation observed in the presence of glassy phases.

While the invention applies to bodies containing any densifying additives, (known additives including for example, MgO, CrN, $ZrO_2$, ZrN, $Y_2O_3$, $La_2O_3$ and $CeO_2$), it is preferred to employ a densifying additive of the type $RE_2O_3$ where RE is yttrium or a lanthanide rare earth including La, Ce, Pr, Nd, Pm, Sm, Eu, Gd, Tb, Dy, Ho, Er, Tm, Yb, and Lu. While some of these rare earth oxides may not be in the form of $RE_2O_3$ as starting materials, for example, $CeO_2$, and $PrO_2$, they are subsequently converted to the $RE_2O_3$ form in the final dense polycrystalline body.

To prepare powder compositions for consolidation, $Si_3N_4$ powders are typically mixed with a densification aid by ball milling. The milling may be done wet and/or dry. There is a natural contamination of the powder mixture by abrasion of the milling container and milling media surfaces during milling. In order to substantially reduce or avoid such contamination, milling should be carried out in non-abradable or non-contaminating containers such as linear polyethylene, polyurethane or rubber lined containers using $Si_3N_4$ milling media. Chemical analysis of powders milled both wet and dry with $Al_2O_3$ media shows a total of 1 to 3 weight percent $Al_2O_3$ added to the batch with about 1/2 of that amount picked up during wet milling and the remainder half during dry milling. This amount has been reduced by incorporation of non-contaminating $Si_3N_4$ media into the milling procedure and/or by shortening milling time. Using $Si_3N_4$ media for wet milling and $Al_2O_3$ media for dry milling reduces the $Al_2O_3$ content to about 0.5 to 1.5 weight percent. Milling both wet and dry with $Si_3N_4$ media reduces the $Al_2O_3$ content essentially to zero, that is, to the level present as an impurity in the $Si_3N_4$ powder.

The milled powder is usually screened through a coarse mesh screen, e.g., 50 or 100 mesh, prior to consolidation.

Bodies may be prepared by hot pressing, hot isostatic pressing, or by any pressureless sintering step preceded by a suitable consolidation step such as dry pressing, isostatic pressing extruding, slip casting, injection molding, etc. See U.S. patent 4,073,845 for a general procedure for pressureless sintering of $Si_3N_4$ bodies. The screened powder is then loaded into a graphite hot pressing die whose interior surfaces have previously been coated with boron nitride powder. The powder is then prepressed at about 13.8 MPa and then the die is placed in a chamber containing argon and a pressure of about 3.4 MPa is applied up to about 1200°C, and then pressure and temperature are increased simultaneously so that the ultimate pressure and temperature are achieved at about the same time. The densification process is monitored using a dial gauge indicating ram travel with the die body. A rate of downward movement of the ram cross head below about 0.1 mm per hour indicates completion of densification. The assembly is then cooled over a period of about 1 to 2 hours. Ultimate pressures and temperatures of from about 20.7 to 34.5 MPa and 1675°C to 1800°C for a time of about 2 to 5 hours are adequate conditions for the achievement of essentially full densification of the silicon nitride body. The strength of compositions hot pressed to theoretical density from $Si_3N_4$—$Y_2O_3$ and $Si_3N_4$—$CeO_2$ powders with a range of $Al_2O_3$ contents are given in Tables I and II.

All strength measurements are in terms of modulus of rupture (MOR) (3 $N/mm^2$), and were made from room temperature to 1400°C using a four point loading fixture with a 22.8 mm outer span and a 10.1 mm inner span, which stresses the specimen by cross bending. Specimen size was 1.27 by 2.54 mm by 25.4 mm. All hot pressed specimens were tested in the strong direction with a cross head speed of 0.51 mm per minute on an Instron machine. Strength was determined by the elastic beam formula, the dimensions of the test specimen and the test fixture. Theoretical density was calculated by the simple rule of mixtures for $Si_3N_4$ and $RE_2O_3$. As may be seen from these Tables, strength increases dramatically at 1400°C with decreasing $Al_2O_3$ impurity content.

TABLE I
Strength of hot pressed $Si_3N_4$ + 13 weight percent $Y_2O_3$

| Sample No. | $Al_2O_3$ weight percent | MOR ($N/mm^2$) | | | |
| --- | --- | --- | --- | --- | --- |
| | | Room temperature | 100°C | 1200°C | 1400°C |
| 1 | 0 | 847.3 | 776.9 | 612.2 | 646.7 |
| 2 | 0.5 | 888 | — | 645.9 | 327.5 |
| 3 | 2.44 | 922.4 | 759.0 | 590.1 | 211.7 |

TABLE II
Strength of hot pressed $Si_3N_4$-$CeO_2$

| Sample No. | $CeO_2$ weight percent | MOR ($N/mm^2$) | | | |
| --- | --- | --- | --- | --- | --- |
| | | 1.5 $Al_2O_3$ (weight percent) | | No $Al_2O_3$ | |
| | | Room temperature | 1400°C | Room temperature | 1400°C |
| 1 | 4 | 720.4 | 191 | 666 | 298.5 |
| 2 | 8 | 741.1 | 164.8 | 715.6 | 268.9 |
| 3 | 12 | 709.4 | 122.7 | 925.9 | 517 |

The data presented in Tables I and II was obtained for module fabricated from high purity $Si_3N_4$ powder, that is, powder containing less than about 0.1 weight percent cation impurities. Tables III and IV show the effect of impurity content in the starting powder material on final high temperature strength. As may be seen from the Tables, when both powders are milled with $Si_3N_4$ media and in linear polyethylene containers so that no alumina is introduced during milling, high temperature strength is up to 60 percent greater for the high purity powder than for the low purity powder. Both samples were hot pressed at 1750°C at 34.5 MPa to 100 percent of theoretical density.

TABLE III
Impurity content of starting $Si_3N_4$ powder (percent by weight)

| Impurity cation | High purity powder | Low purity powder |
| --- | --- | --- |
| Al | 0.002 | 0.424 |
| Fe | — | 1.15 |
| Mn | — | 0.027 |
| C | — | 0.458 |
| Mg | 0.0007 | 0.013 |
| Ca | 0.0006 | 0.224 |
| Mo | 0.01 | — |

5

**0 015 277**

TABLE IV
Strength of hot pressed $Si_3N_4$+13 weight percent $Y_2O_3$ composition

| | MORE (N/mm²) | | | |
|---|---|---|---|---|
| $Si_3N_4$ starting powder | Room temperature | 100°C | 1200°C | 1400°C |
| High purity powder | 847.3 | 777 | 612.2 | 646.7 |
| Low purity powder | 681.8 | 608 | 452.9 | 399.2 |

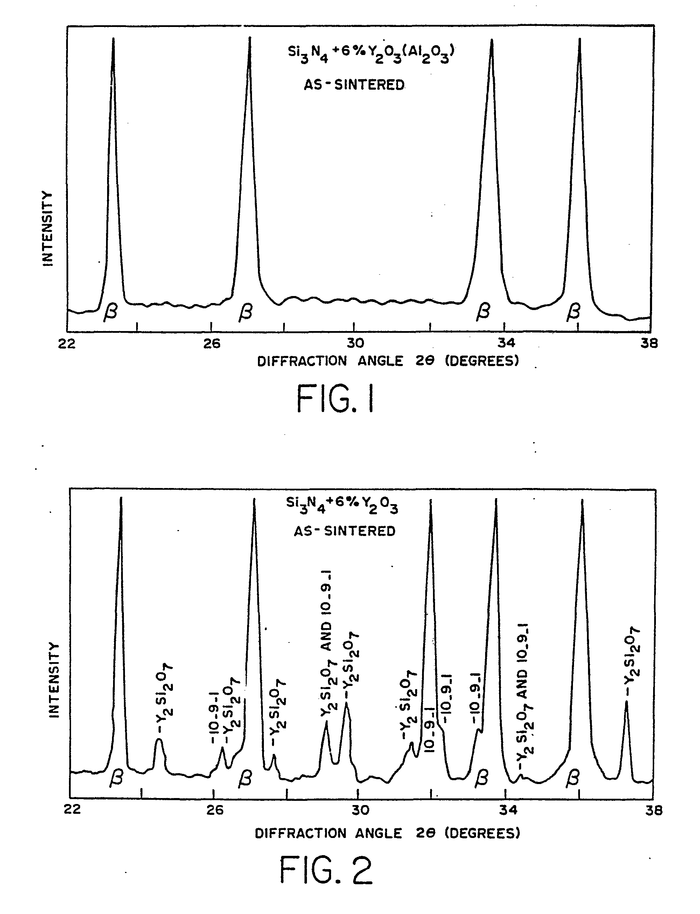

The previous examples are for sintering by hot pressing $Si_3N_4$ bodies. Pressureless sintering in a nitrogen atmosphere was also used to prepare $Si_3N_4$ bodies with varying $Al_2O_3$ content. An $Si_3N_4$ body with 6 weight percent $Y_2O_3$ and essentially no $Al_2O_3$ was sintered two hours at 1775°C and two hours at 1975°C resulting in about 98 percent of theoretical density. This sample was subjected to x-ray diffraction analysis using a scanning x-ray diffractometer with copper $K_a$ radiation. Diffraction analysis showed three phases present, beta $Si_3N_4$, $Y_2Si_2O_7$ and $10Y_2O_3 \cdot 9SiO_2 \cdot 1Si_3N_4$. Previous diffraction analysis of an $Si_3N_4$ body containing six weight percent $Y_2O_3$ and about 2.5 weight percent $Al_2O_3$ showed only beta $Si_3N_4$ to be present, indicating that the second phase was x-ray amorphous. The key portions of the diffractometer scans are shown in Figures 1 and 2 for the alumina-containing and alumina-free bodies respectively, indicating that $Al_2O_3$ causes the second phase to be x-ray amorphous in pressureless sintered $Si_3N_4$ bodies.

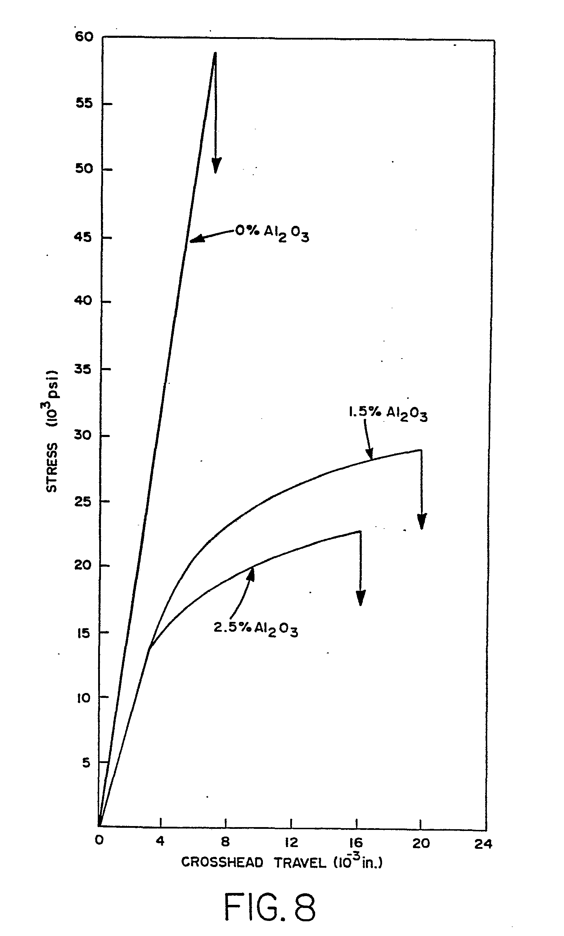

The effect of varying $Al_2O_3$ levels upon high temperature strength of pressureless sintered bodies of $Si_3N_4$ containing 6 percent $Y_2O_3$ is shown in Table V and Figure 8, which is a plot of stress at 1400°C versus cross head travel in 0.0254 mm indicating deformation of the sample during loading. The Figure graphically illustrates for the data of Table V that strength at 1400°C is dramatically reduced by the presence of $Al_2O_3$ in amounts up to 2.5 weight percent, where the intergranular phase has not been heat treated to promote crystallization.

TABLE V
Strength of pressureless sintered $Si_3N_4$ bodies containing 6 percent $Y_2O_3$

| Sample No. | Density (%) theoretical | $Al_2O_3$ (wt. %) | MOR (N/mm²) | | | |
|---|---|---|---|---|---|---|
| | | | Room temp. | 1000°C | 120°C | 1400°C |
| 1 | 98.0 | 0 | 577.7 | — | 474.3 | 393.6 |
| 2 | 98.2 | 0 | 478.8 | 428.8 | 444 | 422.6 |
| 3 | 100.0 | 1.5 | 693.5 | — | 551.6 | 203.4 |
| 4 | 100.0 | 2.5 | 721.8 | 610.8 | 390.9 | 161.3 |

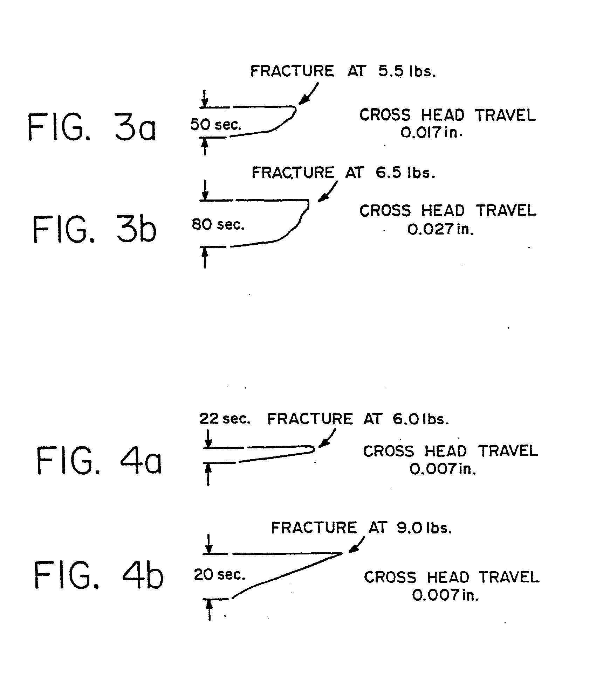

A series of $Si_3N_4$+12 weight percent $Y_2O_3$ specimens containing about 1/2 to 2 weight percent $Al_2O_3$ were prepared and some were heat treated for 5 hours at 1525°C to crystallize the 10-9-1 second phase after sintering. All specimens were tested to determine their strength. The recorder charts for as-sintered and for heat-treated specimens are given in Figure 3 and 4 where the applied load is horizontal and the cross-head travel time is vertical. The top two curves for as-sintered samples (Figure 3) showed rounded displacement (cross-head travel) curves as the load is applied with 50 to 80 seconds required to apply sufficient load to fracture the specimens. This curvature is indicative of plastic deformation of the samples during loading. The average breaking strength of the two example specimens was 132.39 MPa. For the two heat-treated samples, with the crystallized 10-9-1 second phase a different result was obtained as evidenced by the load-deformation curves in Figure 4. First, there is essentially no curvature to the displacement trace indicating that plastic deformation has been minimized or eliminated. Only 20 to 22 seconds was needed to apply the breaking load, a further indication of the elimination of plastic deformation. Finally, the average breaking strength for the two specimens was 174.11 MPa, an increase of 31.5% above that measured for the as-sintered specimens. This shows that a crystallized second phase formed by heat-treating will increase the elevated temperature of $Si_3N_4$—$SiO_2$—$Y_2O_3$ compositions relative to the same composition with amorphous second phases in the as-sintered condition.

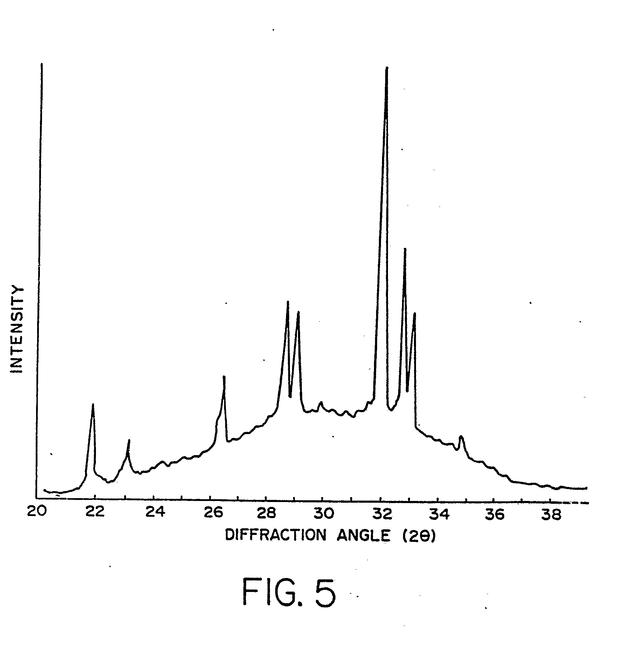

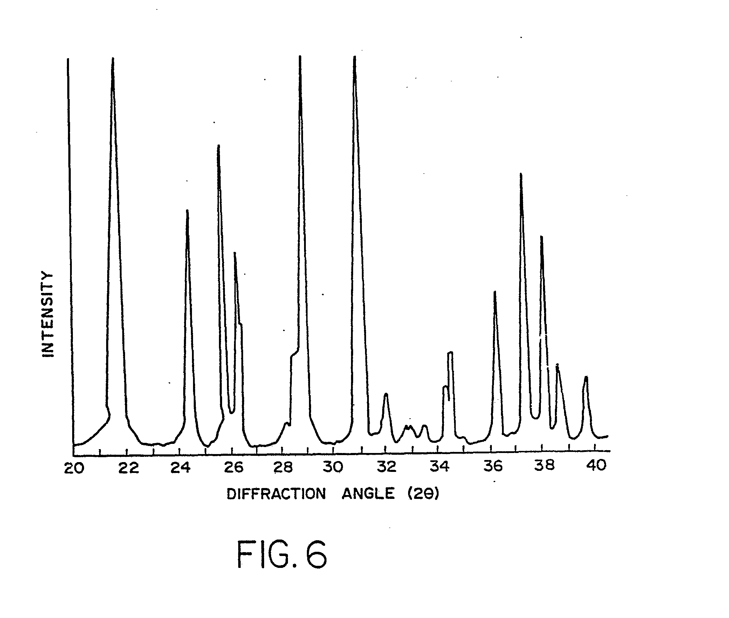

In the above pressureless sintered samples, the second phase volume was small. In order to more distinctly observe the phase morphology of the intergranular material, two powder mixtures of 52 weight percent $Y_2O_3$—28 weight percent $Al_2O_3$—20 weight percent $SiO_2$; and 65 weight percent $Y_2O_3$—35 weight percent $SiO_2$, respectively were prepared. These are the second phase compositions of the $Si_3N_4$ body

6

containing 6 weight percent $Y_2O_3$ with 2 weight percent $Al_2O_3$ and without $Al_2O_3$, respectively. The $SiO_2$ was added since it is a natural species on the surface of the starting $Si_3N_4$ powder at about 3 weight percent level. The mixtures were melted at 1750° and 1840° respectively and then quickly cooled to room temperature. As melted, the $Y_2O_3$—$Al_2O_3$—$SiO_2$ composition contained the phase $7Y_2O_3 \cdot 9SiO_2$, a nonequilibrium phase according to R. R. Wills et al., *J. Materials Science*, Vol. 11, pp. 1305—1309, 1976, plus a large amount of amorphous material as evidenced by the broad hump in the x-ray diffraction scan of Figures 5. The non-$Al_2O_3$ containing $Y_2O_3$—$SiO_2$ composition crystallized directly to the equilibrium phase $Y_2Si_2O_7$, according to Wills, et al., plus a minor amount of $Y_6Si_6O_{21}$, with no evidence of amorphous material. See the x-ray diffraction scan of Figure 6. Thus, by direct experimentation with simulated intergranular compositions, it was demonstrated that the presence of a glass stabilizing oxide such as $Al_2O_3$ hinders the crystallization process during cooling which otherwise would proceed spontaneously to a high degree of completion.

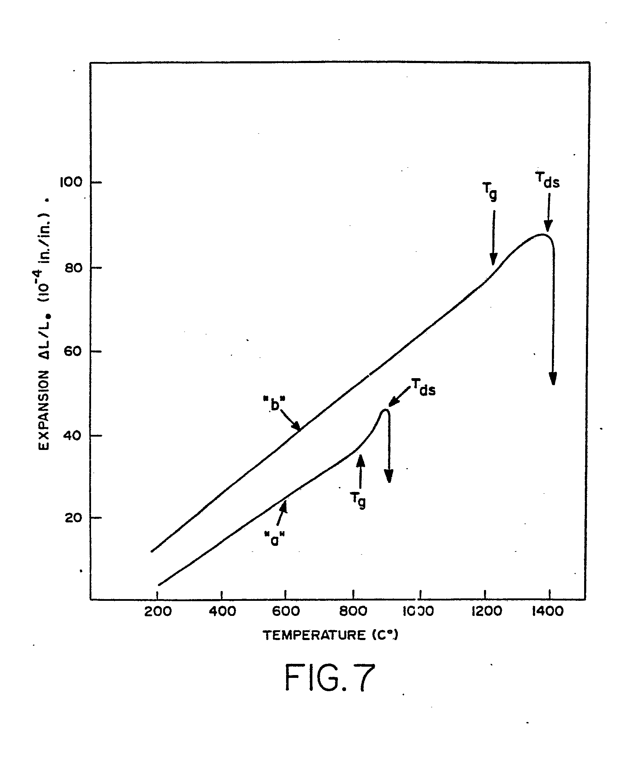

In order to determine if the high temperature mechanical properties of the glassy intergranular phase contribute to the high temperature plastic deformation observed in $Al_2O_3$-containing $Si_3N_4$ bodies, dilatometer tests were carried out on the intergranular phase simulated compositions prepared above. The curves are shown in Figure 7. Curve "a" indicates that the $Al_2O_3$-containing composition has a glass transition of about 800°C and a dilatometric softening point of about 890°C. The transition temperature is that at which the thermal expansion changes from a relatively low value of a solid glass to the relatively high value of a liquid phase, while the softening point is the temperature at which the pressure of the dilatometer probe causes deformation of the sample. For comparison, curve "b" for the composition after a crystallization treatment at 1400°C shows some evidence of a glass transition temperature at as high as 1200°C and a softening point at about 1380°C. This indicates that the glass phase crystallized at about 1400°C.

Strength was measured for the $Y_2O_3$—$Al_2O_3$—$SiO_2$ body as melted and also after heat treatment at 1400°C for 15 hours. The samples were cyclically loaded to 41.4 MPa at successively higher temperatures to determine the non-elastic yield point. The unheat treated sample was elastic to 800°C, and deformed at 900°C. In contrast, the heat treated sample was elastic up to 1300°C, and failed with no evidence of yielding at 1360°C, indicating an MOR of 132.4 MPa. Thus, without heat treatment both the dilatometer and MOR tests indicated a substantial decrease in viscosity of the as-melted sample at about 900°C. X-ray diffraction analysis of the heat treated sample showed that heat treatment converted the non-equilibrium $7Y_2O_3 \cdot 9SiO_2$ phase to $Y_2Si_2O_7$ and an unidentified crystalline phase with no evidence of amorphous material. Confirmation of $Y_2Si_2O_7$ as the major phase was accomplished metallographically.

The $Si_3N_4$ bodies of the present invention are useful as engine parts and components or regenerator or recuperator structures for waste heat recovery.

## Claims

1. Method for producing a polycrystalline body consisting essentially of a first phase of $Si_3N_4$ grains, and a second intergranular phase comprising $SiO_2$ and a densifying additive, and being substantially completely crystalline, in which high purity raw material powders are milled, and hot pressed or sintered after prepressing, characterized in that the $SiO_2$ is present in the amount of at least 3 weight percent, and that impurities which are soluble in the silicate second phase and thus stabilize this intergranular phase in its amorphous state, such as $Al_2O_3$, are maintained below 0,5 weight percent, so that the intergranular phase undergoes full crystallization during cooling from the sintering temperatures, so that a heat treatment after hot pressing or sintering is rendered superfluous.

2. Method according to claim 1, characterized in that the milling is carried out in a non-abradable and non-contaminating container using $Si_3N_4$ milling media.

## Patentansprüche

1. Verfahren zur Herstellung eines polykristallinen Körpers, welcher im wesentlichen aus einer ersten Phase aus $Si_3N_4$-Körnern und einer zweiten interkristallinen Phase mit $SiO_2$ und einem verdichtenden Zuschlagstoff besteht und im wesentlichen vollständig kristallin ist, wobei hochreine Rohmaterialpulver vermischt sind und nach einem Vorpressen heißgepreßt oder gesintert sind, dadurch gekennzeichnet, daß das $SiO_2$ in einer Menge von wenigstens 3 Gew.-% vorliegt und daß Verunreinigungen, welche in der silikatischen Phase löslich sind und somit diese interkristalline Phase in ihrem amorphen Zustand stabilisieren, wie etwa $Al_2O_3$, unter 0,5 Gew.-% vorliegen, so daß die interkristalline Phase während der Abkühlung von den Sintertemperaturen eine vollständige Kristallisation erfährt, so daß eine Wärmebehandlung nach dem Heißpressen oder Sintern überflüssig wird.

2. Verfahren nach Anspruch 1, dadurch gekennzeichnet, daß das Vermischen in einem sich nicht abnutzenden und nicht verschmutzenden Behälter unter Verwendung von $Si_3N_4$ als Mischmedium ausgeführt wird.

# 0 015 277

**Revendications**

1. Procédé de fabrication d'un corps polycristallin comprenant essentiellement une première phase de $Si_3N_4$ en grains, et une deuxième phase intergranulaire incluant du $SiO_2$ et un additif de densification, et étant substantiellement complètement cristallin, dans lequel les poudres des matériaux bruts de haute pureté sont broyées, puis pressées à chaud ou frittées après pré-pressage, caractérisé en ce que la quantité de $SiO_2$ est supérieure à 3% en poids, et que les impuretés solubles dans la deuxième phase de silicate, qui ainsi stabilisent cette phase intergranulaire en état amorphe, tel que $Al_2O_3$, sont maintenues au-dessous de 0,5% en poids, de telle manière que la phase intergranulaire subit une cristallisation complète lors du refroidissement à partir des températures de frittage, et qu'ainsi un traitement à chaud après pressage à chaud ou frittage soit rendu superflu.

2. Procédé selon la revendication 1 caractérisé en ce que le broyage est effectué dans un conteneur non-abrasable et non-contaminant au moyen d'un broyeur de $Si_3N_4$.

8

$Si_3N_4 + 6\% Y_2O_3(Al_2O_3)$

AS-SINTERED

FIG. 1

$Si_3N_4 + 6\% Y_2O_3$

AS-SINTERED

FIG. 2

FIG. 3a

FRACTURE AT 5.5 lbs.

50 sec.

CROSS HEAD TRAVEL
0.017 in.

FIG. 3b

FRACTURE AT 6.5 lbs.

80 sec.

CROSS HEAD TRAVEL
0.027 in.

FIG. 4a

22 sec. FRACTURE AT 6.0 lbs.

CROSS HEAD TRAVEL
0.007 in.

FIG. 4b

FRACTURE AT 9.0 lbs.

20 sec.

CROSS HEAD TRAVEL
0.007 in.

FIG. 5

FIG. 6

FIG.7

FIG. 8